# EUROPÄISCHE PATENTSCHRIFT

(11) **EP 2 337 669 B1**
(45) Veröffentlichungstag und Bekanntmachung des Hinweises auf die Patenterteilung: **29.05.2013**
(21) Anmeldenummer: 09782546.7
(22) Anmeldetag: 03.09.2009
(51) Int. Cl.: B29C 70/30, B29C 70/38, B29C 70/34

(54) **VERFAHREN UND VORRICHTUNG ZUM ABLEGEN UND DRAPIEREN VON ABSCHNITTEN EINER VERSTÄRKUNGSFASERSTRUKTUR ZUR HERSTELLUNG EINES PROFILVORFORMLINGS.**
METHOD AND DEVICE FOR LAYING AND DRAPING PORTIONS OF A REINFORCING FIBRE STRUCTURE TO PRODUCE A PROFILED PREFORM
PROCÉDÉ ET DISPOSITIF POUR LE DÉPÔT ET LE DRAPAGE DE SECTIONS D'UNE STRUCTURE FIBREUSE DE RENFORT POUR LA PRODUCTION D'UNE PRÉFORME PROFILÉE

(30) Priorität: 02.10.2008 DE 102008042574; 02.10.2008 US 102236 P
(43) Veröffentlichungstag der Anmeldung: 29.06.2011
(73) Patentinhaber: Airbus Operations GmbH, 21129 Hamburg (DE)
(72) Erfinder: BARLAG, Carsten, 26441 Jever (DE); SUNDERMANN, Rolf, 21614 Buxtehude (DE); LONSDORFER, Georg, 21682 Stade (DE); DRESSLER, Günther, 88090 Immenstaad (DE); BAUMGARTNER, Christian, 88699 Frickingen (DE)
(74) Vertreter: Isarpatent
(86) Internationale Anmeldenummer: PCT/EP2009/061383
(87) Internationale Veröffentlichungsnummer: WO 2010/037612

(56) Entgegenhaltungen:
- GB-A- 2 268 705
- US-A- 5 954 917
- US-A1- 2003 132 543
- US-A1- 2005 209 735
- US-A1- 2006 011 289

## Beschreibung

Die Erfindung betrifft eine Vorrichtung zum automatischen Ablegen und Drapieren einer Vielzahl bahnförmiger Abschnitte eines Flächengebildes, insbesondere eines multiaxialen Fasergeleges und/oder eines Verstärkungsgewebes, zur Schaffung eines Profilvorformlings auf einem Kern durch wiederholtes Ablegen und Drapieren der Abschnitte, um ein Verstärkungsprofil durch Imprägnierung des Profilvorformlings mit einem aushärtbaren Kunststoffmaterial in einem Formwerkzeug herzustellen.

Bauteile aus Verbundwerkstoffen, insbesondere kohlefaserverstärkte Epoxidharze ("CFK"), finden im modernen Flugzeugbau vermehrt Einzug. Ein in fertigungstechnischer Hinsicht großes Problem stellt jedoch nach wie vor eine weitgehend automatische Herstellung solcher Bauteile in nennenswerten Stückzahlen mit geringen Maßabweichungen dar. Bislang ist es nur möglich, diese Bauteile mit einem relativ hohen manuellen Arbeitsanteil und hierdurch bedingten Ungenauigkeiten sowie hohen Kosten herzustellen, was bisher einem flächendeckenden Einsatz in der Großserienfertigung von zivilen Flugzeugen entgegensteht.

Um vorstehend erwähnte Nachteile zu vermeiden, wird beispielsweise ein zunehmendes Augenmerk auf den Einsatz der s. g. Nasstechnologien, wie zum Beispiel das bekannte "Resin Transfer Molding" ("RTM"-Verfahren) gelegt. Bei dieser Verfahrensart werden bei CFK-Bauteilen mit einer komplexen Geometrie vorgefertigte, trockene Verstärkungsfaserstrukturen (s. g. " Vorformlinge") in korrespondierend zu den Vorformlingen ausgestaltete, in der Regel mehrteilige Formwerkzeuge eingelegt und anschließend unter gleichzeitiger Anwendung von Druck und Temperatur mit einem aushärtbaren Kunststoffmaterial, beispielsweise einem Epoxidharzsystem, imprägniert. Anschließend wird der mit dem aushärtbaren Kunststoffmaterial vollständig durchtränkte Vorformling bei einer Temperatur von bis zu 200 °C ausgehärtet. Der Einsatz des konturdefinierenden Formwerkzeugs gewährleistet bei dieser Verfahrensart eine hohe Maßhaltigkeit und auch eine bedingte Großserientauglichkeit für die Fertigung. Ein bisher weitgehend ungelöstes Problem stellt jedoch die maschinelle Herstellung der für diese Verfahrensart nach wie vor benötigten Vorformlinge dar, die gegebenenfalls zusätzlich mit einem Bindemittel versetzt werden müssen, um überhaupt handhabungsfähig zu werden, denkbar ist auch eine abschließende Vernähung.

Heutzutage werden derartige Vorformlinge für komplexe, gekrümmte CFK-Profile durch das Ablegen von vorgefertigten Faserhalbzeugen, wie beispielsweise einem multiaxialen Fasergelege ("MAG"), einem Vlies oder einem Gewebe hergestellt. Die Zuschnitte werden zu diesem Zweck aus der Rollenware herausgeschnitten, auf einen Kern zur Formgebung des Vorformlings aufgelegt und dann in Abhängigkeit von der geforderten Oberflächengeometrie sowie dem konkreten Einzelfall mit verschiedenen Techniken unter Einsatz diverser Hilfsvorrichtungen überwiegend manuell drapiert. Der Terminus des "Drapierens" wird im Kontext dieser Anmeldung insbesondere als das weitgehend faltenfreie Umformen eines anfänglich ebenen Verstärkungsfasergeleges in eine mindestens in einer Richtung des Raumes gekrümmte Oberflächengeometrie definiert, wobei die einzelnen übereinander verlaufenden Verstärkungsfasern übereinander gleiten und sich deren Winkel zueinander in Kreuzungsbereichen verändern.

Desweiteren ist zur Herstellung von trockenen Vorformlingen der s. g. "TFP-Ablegeprozess" (s. g. "Tailored Fibre Placement") bekannt, bei dem relativ schmale Verstärkungsfaserstränge sukzessive nebeneinander und übereinander auf einem textilen Substrat abgelegt und anschließend in ihrer Lage fixiert werden. Dieser TFP-Ablegeprozess erlaubt zwar einen hohen Automatisierungsgrad sowie die Schaffung von Vorformlingen mit einer nahezu beliebigen Oberflächengeometrie, ist jedoch extrem zeitaufwändig. Weiterhin stellt das Substrat im fertigen Verbundbauteil einen Fremdkörper dar und durch das Anheften kann es zu Verwerfungen der Verstärkungsfaserstränge kommen ("Ondulationen").

Darüber hinaus ist es bekannt, Vorformlinge im Wickelverfahren durch das Aufwickeln auf einem rotierenden Dorn herzustellen. Das Wickelverfahren ist insbesondere für rotationssymmetrische Vorformlinge geeignet und zudem gut automatisierbar. Nachteilig ist jedoch, dass die erzielbare Oberflächengeometrie der Vorformlinge im Wesentlichen auf runde Körper beschränkt ist.

Daneben sind zahlreiche Strick-, Häkel- und Flechtverfahren zur Herstellung von langgestreckten Vorformlingen bekannt, aus denen dann in einem zweiten Schritt durch komplexe Falt- bzw. Klappvorgänge Vorformlinge mit einer beispielsweise z-förmigen oder u-förmigen Querschnittsgeometrie gebildet werden. Die Faltprozesse sind jedoch nur schwer automatisierbar und im Ergebnis nicht sicher reproduzierbar. Ferner lassen sich auf diese Weise keine abschnittsweisen Verstärkungsbereiche bilden.

Die Druckschrift GB 2268705 - A beschreibt eine Vorrichtung zum Auflegen von Faserschichten auf eine Liegeflache.

Die Druckschrift US 2005/0209735 - A beschreibt eine Vorrichtung zum Auflegen von Bändern auf Formen und Formkerne.

Die Druckschrift US 2003/0132543 - A beschreibt die Herstellung von Faserverbundwerkstoffen durch ein Resin-Transfer-Moulding-Verfahren.

Die Druckschrift US 5954917 - A beschreibt eine mit einer Bandabgabevorrichtung versehene Einrichtung zur Herstellung von Verbundstoffstrukturen.

Aufgabe der Erfindung ist es, die vorstehend beschriebenen Nachteile der bekannten Verfahren weitgehend zu vermeiden und eine Vorrichtung anzugeben, die eine großserientaugliche Herstellung von Vorformlingen für die Herstellung von zumindest eindimensional gekrümmten Verstärkungsprofilen aus einem Verbundmaterial, beispielsweise einem kohlefaserverstärkten Epoxidharzsystem, erlaubt.

Diese Aufgabe wird zunächst durch eine Vorrichtung mit den Merkmalen des Patentanspruchs 1 gelöst.

Dadurch, dass mindestens ein Abschnitt in mindestens einer Kassette zwischen zwei Rollenbahnen zur Ablage auf dem Kern bereitgehalten wird,
kann ein Profilvorformling zur Herstellung eines geraden und/oder gekrümmten Profils schnell abgelegt und drapiert werden, da jede benötigte Lage zumindest eines Abschnittes in mindestens einer Kassette bereitgehalten und aus dieser für den Ablage- und Drapierprozess herausgezogen wird. In diesem Fall weist die Kassette zwei gegenüberliegend angeordnete Rollenbahnen zur Aufnahme des abzulegenden und drapierenden Abschnittes auf.

Vorzugsweise umfasst die Vorrichtung jedoch mindestens drei zu einer so genannten Kassettenanordnung zusammengefasste Kassetten zur Aufnahme und Bereithaltung von mindestens drei Abschnitten, die sich über die gesamte Längenerstreckung des in der Regel gekrümmten Profils erstrecken, so dass diese mindestens drei Abschnitte zeitgleich aus den Kassetten zum Ablegen und Drapieren herausgeschoben werden.

Um das Herausschieben der einzelnen Abschnitte des Verstärkungsfaserflächengebildes aus der Kassette zu ermöglichen, weist diese jeweils mindestens gegenüberliegend angeordnete Rollenbahnen auf, zwischen denen der Abschnitt vom Flächengebilde aufgenommen ist. Jede Rollenbahn ist wiederum mit einer Vielzahl von Rollen gebildet. Mit der Vorrichtung wird als Flächengebilde bevorzugt ein mit Kohlefasern aufgebautes Multiaxialgelege verarbeitet.

Die aus der Kassette oder den Kassetten herausgeschobenen Abschnitte werden auf einem Kern abgelegt, dessen Oberflächengeometrie in etwa einer inneren Oberflächengeometrie des herzustellenden Profilvorformlings entspricht. Die Abschnitte weisen eine Länge auf, die ungefähr dem Umfang des Kerns, umfassend eine Vorderseite, eine Rück-seite sowie eine Oberseite zuzüglich eines Zuschlags für eine später gegebenenfalls erfolgende Besäumung des Profilvorformlings entspricht.

Nachdem eine Lage vollständig abgelegt und drapiert wurde, wird die mindestens eine Kassette erneut mit einem Zuschnitt des Flächengebildes bestückt bzw. beladen und der Ablege- und Drapierprozess so lange wiederholt, bis eine vorgegebene Materialstärke des Profilvorformlings erreicht ist.

Im Fall von mindestens zwei Kassetten können diese gelenkig miteinander verbunden sein, so dass eine Handhabungsvorrichtung, beispielsweise ein Knickarmroboter mit mehreren Freiheitsgraden oder ein Portalroboter, zur gemeinsamen Positionierung der Kassetten im Raum in Relation zum Kern ausreichend ist. Alternativ ist es denkbar, die Kassetten jeweils individuell im Raum positionierbar auszugestalten, was beispielsweise durch jeweils eine Handhabungsvorrichtung für jede Kassette erreichbar ist.

Das erneute Bestücken der Kassetten mit den Abschnitten des flächenhaften Verstärkungsfasergeleges erfolgt bevorzugt vollautomatisch mit mindestens einer Vorratsrolle für das Gelege sowie mindestens einer Schneidevorrichtung.

Nach einer vorteilhaften Ausgestaltung der Vorrichtung sind mindestens drei gelenkig miteinander verbundene Kassetten vorgesehen, um einer beliebigen Krümmung des Kerns zu folgen.

Hierdurch ist es nicht mehr erforderlich, jede Kassette für den Ablege-, Zieh- und Drapierprozess separat im Raum mittels einer eigenen, individuellen Handhabungsvorrichtung zu positionieren. Darüber hinaus wird die mindestens einachsig gekrümmte Kontur des Kerns bzw. des darauf abzulegenden Profilvorformlings durch ein Vieleck angenähert, das durch die vorzugsweise nebeneinander angeordneten und jeweils gelenkig untereinander verbundenen Kassetten gebildet ist.

Je höher die Anzahl der Kassetten mit den Rollen innerhalb der Vorrichtung ist, desto genauer kann eine Approximation der Kassettenanordnung an eine jeweilige lokale Krümmung des Profilvorformlings erfolgen. Die Gelenke zwischen den Rollenbahnen ermöglichen es, die Rollenbahnen aus der beim Ablege- und Drapierprozess üblicherweise eingenommenen parallel zueinander beabstandeten Anordnung heraus zu schwenken, um beispielsweise einen neuen Abschnitt des Verstärkungsfaserflächengebildes von einer Vorratsrolle aufzunehmen.

Die Gelenke zwischen den einzelnen Kassetten und zwischen den Rollenbahnen können beispielsweise mit motorischen Stellantrieben, Hydraulik- und/oder Druckluftkolben als Aktuatoren gebildet sein, so dass eine vollautomatische, flexible sowie schnelle Anpassung der in der Regel eine Vielzahl von Kassetten mit Rollenbahnen umfassenden Kassettenanordnung an unterschiedlich geformte Kerne bzw. abzulegende Profilvorformlinge erfolgen kann.

Eine Weiterentwicklung der Vorrichtung sieht vor, dass die Kassetten mittels mindestens einer Handhabungsvorrichtung, insbesondere mindestens eines Knickarmroboters und/oder eines Portalroboters mit mindestens sechs Freiheitsgraden frei im Raum positionierbar sind.

Infolge dieser Ausgestaltung wird es möglich, auch einer zweidimensional gekrümmten Oberflächengeometrie eines Kerns bzw. eines hierauf sukzessive abzulegenden Profilvorformlings mittels einer geeigneten Bahnsteuerung selbsttätig zu folgen und das Ablegen sowie Drapieren der Abschnitte auf dem Kern vollautomatisch mit hoher Genauigkeit und einer guten Reproduzierbarkeit erfolgen zu lassen.

Nach Maßgabe einer weiteren Fortbildung der Vorrichtung weist der Kern zur Schaffung eines Profilvorformlings für ein mindestens einfach gekrümmtes Verstärkungsprofil insbesondere eine U-förmige, eine Z-förmige, eine L-förmige, eine I-förmige Querschnittsgeometrie oder einer beliebige Kombination hiervon auf.

Hierdurch wird es möglich, Verstärkungsprofile aus CFK-Materialien, wie zum Beispiel Stringerprofile, Querträgerprofile oder Ringspantsegmente zur Aussteifung einer Flugzeugrumpfzellenstruktur, die in sehr hohen Zahlen von typischerweise mehreren 1.000 Stück benötigt werden, mittels der erfindungsgemäßen Vorrichtung mit kurzen Durchlaufzeiten in Verbindung mit einer hohen Fertigungs- und Wiederholungsgenauigkeit nahezu vollautomatisch herzustellen. Die Krümmung kann abschnittsweise unterschiedlich groß ausfallen, das heißt ein Krümmungsradius des Profils muss nicht zwingend über dessen Längenerstreckung hinweg konstant sein. Zusätzlich kann sich auch die Querschnittsgeometrie abschnittsweise ändern. Dies bedeutet, dass sich beispielsweise die Breite und/oder die Höhe des abzulegenden Vorformlings bzw. eines Kerns für ein Rechteckprofil entlang der Umfangsrichtung bzw. Längenerstreckung verändern können.

Eine Weiterentwicklung der Erfindung sieht vor, dass im Bereich einer Kernvorderseite und einer Kernrückseite jeweils eine Klemmvorrichtung vorgesehen sind.

Zunächst wird ein vorher exakt abgelängter Abschnitt des auf den Kern aufzubringenden Verstärkungsfaserflächengebildes aus der Kassette heraus geschoben. In diesem Moment wird der Anfang des Abschnittes im Bereich des vorderen Kerns mittels der vorderen Klemmvorrichtung fixiert. Anschließend wird die Kassette bzw. die gesamte Kassettenanordnung mittels der Handhabungsvorrichtung mit Vorspannung über den Kern herübergezogen, wobei der Abschnitt in gekrümmten Bereichen drapiert und in ebenen Kernbereichen abgelegt wird. Wenn die Kassette mit dem Abschnitt die Kernrückseite erreicht hat, wird die Kassette noch ein kleines Stück über die Rückseite des Kerns hinweg nach unten geführt, damit mittels der hinteren Klemmvorrichtung der abgelegte und der unter einer geringfügigen Vorspannung stehende Abschnitt auf dem Kern geklemmt werden kann. Anschließend wird die gesamte Kassettenanordnung zu Vorratsrollen verfahren, auf denen das Verstärkungsfaserflächengebilde vorgehalten wird. Zum erneuten Beladen der Kassettenanordnung mit den Abschnitten können beispielsweise die jeweils zwei Rollenbahnen in einer Kassette um einen Winkel auseinander geklappt werden, so dass von den Vorratsrollen ein Abschnitt mit einer definierten Länge zwischen die Rollenbahnen der Kassetten einlaufen kann. Mittels automatisierter Schneideeinrichtungen wird dann das von den Vorratsrollen abgezogene Verstärkungsfaserflächengebilde auf die richtige Länge abgelängt. Die Länge der Abschnitte entspricht jeweils der lokalen Länge der Umfangskontur des Kerns zuzüglich eines Zuschlages, um das Festklemmen des Anfangs und des Endes des jeweiligen Abschnittes auf dem Kern sowie gegebenenfalls eine noch erforderliche Besäumung nach der Beendigung des Legeprozesses zu ermöglichen. Nachdem die Kassettenanordnung erneut mit den Abschnitten des Verstärkungsfaserflächengebildes, bei dem es sich insbesondere um ein multiaxiales Gelege mit Kohlefasem handelt, die unter verschiedenen Winkeln (bspw. 90°, ±45°, 30°, 60°) und 0° übereinander angeordnet sind, wird eine weitere Lage von Abschnitten auf dem Kern abgelegt. Dieser Vorgang wird solange wiederholt, bis die erforderliche Anzahl von Lagen auf dem Kern erreicht ist. Die optionalen 0°-Lagen werden erforderlichenfalls mittels einer Zusatzeinrichtung, insbesondere einer Abrolleinrichtung, abgelegt.

Gemäß einer weiteren vorteilhaften Ausgestaltung ist vorgesehen, dass eine bahnförmige Verstärkungsfaseranordnung insbesondere im Bereich der Kernvorderseite und/oder der Kernrückseite durch mindestens eine frei im Raum positionierbare Abrollvorrichtung ablegbar ist.

Hierdurch können zusätzlich 0°-Lagen (insb. zur Aufnahme der Umfangskräfte) in den Lagenaufbau des Profilvorformlings eingebracht werden, die parallel zur Längsrichtung des Profilvorformlings bzw. in Umfangsrichtung im Falle von gekrümmten Profilvorformlingen verlaufen. Diesen zusätzlichen Verstärkungsfaserlagen kommt eine entscheidende Bedeutung für die erreichbaren Festigkeiten des fertigen CFK-Bauteils zu, wenn das Verstärkungsprofil beispielsweise als Ringspant oder Ringspantsegment verwendet werden soll, da in diesem Bereich der Rumpfzellenstruktur sehr hohe Umfangslasten auftreten, die im Wesentlichen nur von parallel zur Umfangsrichtung verlaufenden Verstärkungsfasern aufgenommen werden. Somit ermöglicht die erfindungsgemäße Vorrichtung eine vollautomatisierte Herstellung eines Profilvorformlings mit einer kraftflussgerechten bzw. kraftlos optimierten Orientierung der darin angeordneten Verstärkungsfasern mit geringen Durchlaufzeiten, wobei zugleich eine hohe Reproduzierbarkeit und Maßhaltigkeit des Lagenaufbaus gewährleistet ist.

Darüber hinaus wird die erfindungsgemäße Aufgabe durch ein Verfahren nach Maßgabe des Patentanspruchs 13 gelöst, das die folgenden Schritte umfasst:
a) Schaffung eines Profilvorformlings durch schichtweises Ablegen und Drapieren von Abschnitten des Verstärkungsfaserflächengebildes auf einem Kern, wobei mindestens ein Abschnitt aus mindestens einer Kassette herausgezogen wird,
b) Einlegen des Profilvorformlings in ein Formwerkzeug,
c) Infiltrieren und Aushärten des Profilvorformlings in dem Formwerkzeug mit einem aushärtbaren Kunststoffmaterial unter gleichzeitiger Anwendung von Druck und Temperatur.

Hierdurch können gekrümmte CFK-Verstärkungsprofile zur Aussteifung von Rumpfzellenstrukturen für Flugzeuge vollautomatisch, mit geringen Durchlaufzeiten und einer hohen Wiederholungs- und Fertigungsgenauigkeit mit hoher Maßhaltigkeit produziert werden. Grundsätzlich kann das Verfahren, insbesondere bei geringfügig gekrümmten Profilen mit nur einer Kassette durchgeführt werden. In vorteilhafter Weise kommen jedoch zwei, drei oder mehr gelenkig zu einer Kassettenanordnung verbundene Kassetten zum Einsatz, um auch auf langen und gekrümmten Kernen zur Herstellung von beispielsweise CFK-Profilen für Ringspante oder dergleichen den Ablage- und Drapierprozess zu beschleunigen.

Im Verfahrensschritt a) wird der eigentliche Profilvorformling durch schichtweises Ablegen und Drapieren auf dem Kern von vorher auf die richtige Länge gebrachten Abschnitten des Verstärkungsfaserflächengebildes gebildet. Zu diesem Zweck werden die Abschnitte aus den Kassetten herausgeschoben, auf dem Kern abgelegt und hierbei in Bereichen einer gekrümmten Kernoberflächengeometrie zugleich drapiert. Der Vorgang des Ablegens und Drapierens wird solange wiederholt, bis die vorgesehene Anzahl von Lagen auf dem Kern erreicht ist. Die Lagefixierung der bereits abgelegten Abschnitte erfolgt mittels einer Klemmvorrichtung, die im Bereich der Kernvorderseite und der Kernrückseite des Kerns angeordnet ist.

Erforderlichenfalls, falls nicht schon im Fasermaterial enthalten, kann in diesem Verfahrensschritt eine Fixierung einer abzulegenden Lage mittels einer Auftragseinrichtung erfolgen. Die Auftragseinrichtung umfasst beispielsweise eine geeignete Streueinrichtung, wie zum Beispiel einen oberhalb des Kerns angeordneten Streukasten, der mit einem Bindemittel befüllt ist. Alternativ können auch Riesel- oder Sprüheinrichtungen zum Auftragen des Bindemittels vorgesehen sein. Als Bindemittel kommt vorzugsweise ein feinkörniges Pulver aus einem thermoplastischen und leicht aufschmelzbaren Material in Betracht. Nachdem eine Lage des Verstärkungsfaserflächengebildes auf dem Kern abgelegt und mit der Klemmvorrichtung fixiert wurde, wird zunächst das Bindemittel vorzugsweise im Bereich einer Kernoberseite aufgebracht. Anschließend wird eine nachfolgende Lage eines Abschnittes des Verstärkungsfaserflächengebildes abgelegt. Danach wird das aufgestreute Bindemittel mittels einer Heizeinrichtung, die bevorzugt als eine elektrisch betriebene Strahlungsheizung ausgestaltet ist, aufgeschmolzen und somit ein fester mechanischer Verbund zwischen den beiden übereinander liegenden Lagen geschaffen. Der hierfür erforderliche Anpressdruck kann durch eine Presseinrichtung, wie zum Beispiel eine Vakuummatte und/oder einen Pressstempel, erfolgen. Der Pressstempel kann durch Induktionsspulen, eine elektrische Widerstandsheizung oder durch ein im Pressstempel zirkulierendes Fluid erwärmbar sein und/oder mittels einer Kühleinrichtung abkühlbar sein, um eine schnelle Temperierung des konsolidierten Profivorformlings zu erreichen. Eine Oberflächengeometrie des Pressstempels folgt hierbei der vorgegebenen Sollgeometrie des Profilvorformlings.

Im Verfahrensschritt b) wird der vorgefertigte Profilvorformling vom Kern abgehoben und in ein mehrteiliges Formwerkzeug eingelegt. Vor und/oder nach dem Abheben des Profilvorformlings vom Kern kann es erforderlich sein, eine Besäumung der Kanten des Profilvorformlings vorzunehmen, um die geforderte Maßhaltigkeit zu gewährleisten. Nach dem Einlegen des Profilvorformlings in das in der Regel mehrteilige Formwerkzeug erfolgt im Verfahrensschritt c) das Infiltrieren bzw. Imprägnieren und Aushärten des Profilvorformlings zum Bauteil. Zu diesem Zweck wird ein aushärtbares Kunststoffmaterial, insbesondere ein geeignetes Epoxidharzsystem, unter erhöhtem Druck in das Formwerkzeug gegeben, so dass der Profilvorformling vollständig durchtränkt wird. Anschließend erfolgt die Aushärtung des vollständig mit dem aushärtbaren Kunststoffmaterial imprägnierten Profilvorformlings unter gleichzeitiger Anwendung von Druck und Temperatur im Formwerkzeug, um das CFK-Bauteil, insbesondere das herzustellende CFK-Profil zu schaffen.

Weitere vorteilhafte Ausgestaltungen der Vorrichtung sowie des Verfahrens sind in den weiteren Patentansprüchen dargelegt.

In der Zeichnung zeigt:
- **Fig. 1**: Eine perspektivische Ansicht von vier Kassetten einer Kassettenanordnung der Vorrichtung,
- **Fig. 2-6**: eine schematische Darstellung des Verfahrensablaufs anhand einer vereinfachten Darstellung der Vorrichtung beim Aufbringen und Drapieren eines Abschnittes auf den Kern,
- **Fig. 7**: das fakultative Aufbringen eines Bindemittels mittels einer Auftragseinrichtung,
- **Fig. 8**: das Aufschmelzen des Bindemittels,
- **Fig. 9**: eine Darstellung einer optionalen Aufbringung von Verstärkungsfasern mit einer 0°-Orientierung, und
- **Fig. 10**: eine Darstellung der Beschickung einer Kassette innerhalb einer Kassettenanordnung mit einem Abschnitt des Verstärkungsfaserflächengebildes.

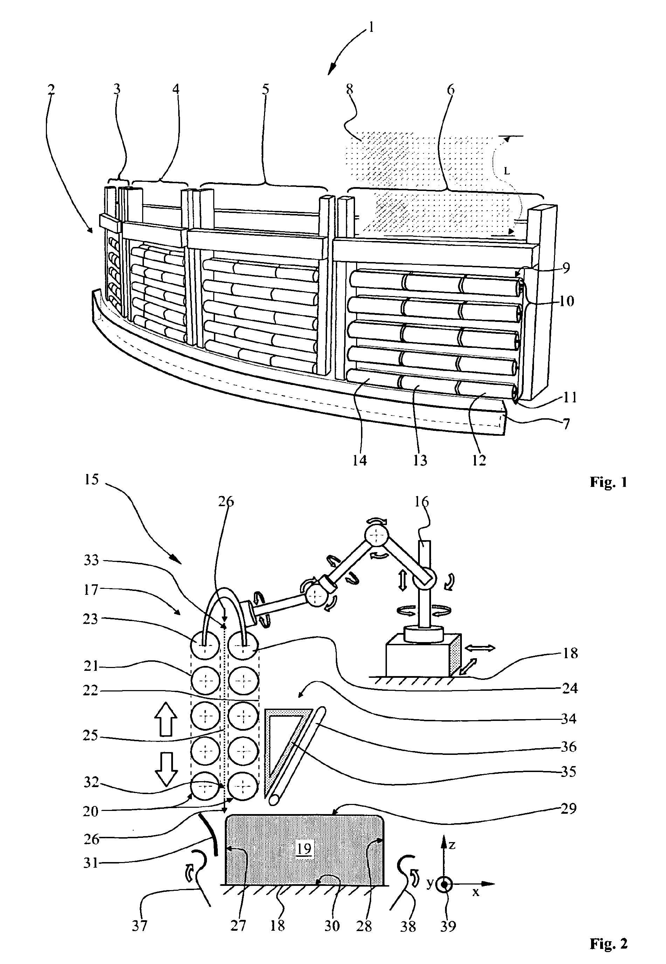

Die Fig. 1 zeigt eine perspektivische Ansicht von vier Kassetten einer Kassettenanordnung der Vorrichtung.

Die in Fig. 1 nicht komplett abgebildete Vorrichtung 1 umfasst unter anderem eine Kassettenanordnung 2 mit insgesamt vier nebeneinander angeordneten Kassetten 3 bis 6. Die in sich ebenen Kassetten 3 bis 6 sind jeweils untereinander beispielsweise mit nicht dargestellten Feststellgelenken verbunden. Um der eindimensionalen Krümmung eines Kerns 7 möglichst genau zu folgen, können die Gelenke gelöst und die Kassetten 3 bis 6 solange ausgerichtet werden, bis eine optimale Annäherung der Kassettenanordnung 2 an den vorgegebenen Krümmungsverlauf des Kerns 7 erreicht ist. Durch nachfolgendes Arretieren der Feststellgelenke kann diese Einstellung für den gesamten Ablage- und Drapierprozess konserviert werden. Diese Feststellgelenke können zum Beispiel mit selbsthemmenden elektromotorischen Stellantrieben realisiert sein. Eine Verstellung während des Drapiervorgangs ist in der Regel aufgrund der Radiusänderung stets erforderlich. Die Kassetten 3 bis 6 können gegebenenfalls in sich auch gekrümmt ausgestaltet sein. In einer solchen Konstellation laufen die Rollen innerhalb der Rollenbahnen zum Beispiel auf einer biegsamen Welle. Alternativ ist auch die Verwendung von flexiblen Rollen mit einer gewissen Eigenelastizität denkbar.

Je größer die Anzahl der Kassetten 3 bis 6 innerhalb der Kassettenanordnung 2 ist, desto genauer lässt sich - zumindest im Fall einer unelastischen Kassettenanordnung bzw. Rollenbahn - der Verlauf der Kassettenanordnung 2 an die Kontur eines gekrümmten Kerns annähern. Der Kern 7 dient zur Ablage eines in Fig. 1 herausgezogen dargestellten Abschnittes 8 eines Verstärkungsfaserflächengebildes, das in jede der vier Kassetten 3 bis 6 vollständig eingezogen ist und zur Verarbeitung vorgehalten wird. Der Kern 7 verfügt im gezeigten Ausführungsbeispiel über eine angenähert rechteckförmige Querschnittsgeometrie, die insbesondere zur Herstellung von Profilvorformlingen für so genannte C-Profile bzw. U-Profile geeignet ist. Grundsätzlich kann der Kern 7 jede beliebige eindimensional und/oder zweidimensional gekrümmte Oberflächengeometrie aufweisen, um auch andere Vorformlinge zur Herstellung von alternativen Profilgeometrien herstellen zu können.

Sämtliche Kassetten 3 bis 6 sind im Ausführungsbeispiel identisch aufgebaut, so dass es vorstehend ausreichend ist, den grundsätzlichen Aufbau einer Kassette exemplarisch für die Übrigen am Beispiel der vorderen Kassette 6 näher zu erläutern.

Die Kassette 6 umfasst zwei Rollenbahnen 9,10, die hintereinander in geringem Abstand angeordnet sind. Jede der Rollenbahnen 9,10 umfasst im gezeigten Ausführungsbeispiel der Fig. 1 insgesamt 5 horizontal angeordnete Rollen, von denen eine Rolle 11 stellvertretend für alle übrigen identischen Rollen mit einer Bezugsziffer versehen ist. Die Rollen sind in vertikaler Richtung gleichmäßig übereinander in der Kassette 6 drehbar aufgenommen. Die Anzahl der Rollen innerhalb jeder Rollenbahn ist in weiten Grenzen frei wählbar und hängt vor allem von einer Länge L des zwischen den Rollenbahnen 9,10 aufzunehmenden Abschnittes 8 des Verstärkungsfaserflächengebildes ab. Im gezeigten Ausführungsbeispiel der Fig. 1 sind die Rollen je dreiteilig ausgeführt, das heißt, dass beispielsweise die Rolle 11 mit insgesamt 3 Teilrollen 12 bis 14 aufgebaut ist, die auf einer gemeinsamen, gegebenenfalls biegsamen Welle drehbar aufgenommen sind. Die Rollen sind zumindest im Fall des Einsatzes von biegsamen Wellen innerhalb der Rollenbahnen mit einem elastischen Material gebildet bzw. verfügen zumindest über eine elastische Ummantelung, um das zwischen den Rollenbahnen 9,10 aufgenommene Verstärkungsfaserflächengebilde nicht zu beschädigen. Besonders geeignet sind Materialien wie Gummi, Filz oder ein mit Kunstfasern gebildeter Samtstoff mit niedrigem Flor.

Bevorzugt verfügt jede einzelne Rolle in jeder der Kassetten 3 bis 6 über einen eigenen Antrieb, bei dem es sich insbesondere um stufenlos elektronisch regelbare Elektromotoren handelt, die unmittelbar in die Rollen integriert sind. Hierdurch ist sichergestellt, dass sich die Abschnitte des Verstärkungsfaserflächengebildes streckungsfrei bzw. frei von Verzug oder anderen Beschädigungen der Faseranordnung aus den Kassetten 3 bis 6 herausschieben lassen.

Die gesamte Kassettenanordnung 2 ist an einer Handhabungsvorrichtung, wie beispielsweise einem Knickarmroboter oder Portalroboter angeordnet, um eine weitgehend freie Positionierung im Raum, das heißt insbesondere in Bezug zum Kern 7 zu gewährleisten. Alternativ kann jede einzelne Kassette 3 bis 6 über eine solche Positioniereinrichtung verfügen. In diesem Fall ist eine gelenkige Verbindung zwischen den Kassetten 3 bis 6 entbehrlich.

Erfindungsgemäß wird die Kassettenanordnung 2 mittels der Handhabungsvorrichtung um die Oberseite des Kerns 7 herumgeführt, während die Abschnitte synchron aus den Kassetten 3 bis 6 mittels der Rollen herausgeschoben und auf dem Kern 7 abgelegt bzw. drapiert werden. Hierbei werden die Anfänge bzw. die Enden der Abschnitte des Verstärkungsfaserflächengebildes mittels einer geeigneten, in der Fig. 1 nicht dargestellten Klemmvorrichtung im Bereich des Kerns 7 fixiert. Dieser Ablege- und Drapierprozess wird solange wiederholt, bis eine vorgegebene Lagenzahl von Abschnitten auf dem Kern 7 erreicht ist.

Die vollständige Vorrichtung 1 umfasst neben der in Fig. 1 dargestellten Kassettenanordnung 2 weiterhin eine Blaseinrichtung und eine Auftragseinrichtung zur zusätzlichen Zwischenlagenfixierung der abgelegten Lagen durch ein im und/oder auf dem Fasermaterial bereits vorhandenes Bindemittel oder ein mittels der Auftragseinrichtung nachträglich aufgebrachtes Bindemittel, das abschließend mittels einer geeigneten Heizeinrichtung aufgeschmolzen wird (vgl. insb. Fig. 2-11) und durch eine Presseinrichtung konsolidiert wird. Der Begriff des Konsolidierens meint in diesem Zusammenhang eine Glättung der Oberflächengeometrie des Profilvorformlings unter gleichzeitiger Kompaktierung, das heißt Verdichtung, sowie einer Angleichung an eine vorgegebene Solloberflächengeometrie des Profilvorformlings. Zugleich werden etwaige Lufteinschlüsse und Ondulationen innerhalb des Profilvorformlings eliminiert. Unter Aufwendung eines ausreichend hohen Pressdrucks mittels der Presseinrichtung wird der Vorformling bevorzugt unter gleichzeitiger Abkühlung konsolidiert. Die Konsolidierung kann beispielsweise mit mindestens einem Druckstempel, einer automatisch aufgelegten Vakuummatte oder dergleichen erfolgen, die optional über eine Einrichtung zur Wärmeabfuhr verfügen, um den Abkühlprozess nach erfolgter Konsolidierung zu beschleunigen. Grundsätzlich ist nach jedem Aufschmelzen des Bindemittels das Konsolidieren bzw. Kompaktieren und Glätten erforderlich. Darüber hinaus ist eine umfangreiche Steuer- und Regeleinrichtung vorhanden, um sämtliche Abläufe innerhalb der Vorrichtung weitgehend selbsttätig ablaufen zu lassen.

Die mittels der erfindungsgemäßen Vorrichtung 1 hergestellten Profilvorformlinge werden nach dem Abschluss des Ablege- und Drapiervorganges in ein Formwerkzeug eingelegt und dort unter Anwendung von Druck und/oder Temperatur mit einem aushärtbaren Kunststoffmaterial, insbesondere einem geeigneten Epoxidharzsystem, vollständig imprägniert und anschließend in einem Temperaturbereich zwischen 120 °C und bis zu 320 °C zu einem CFK-Bauteil ausgehärtet.

Die in Fig. 2 gezeigte Vorrichtung 15 umfasst einen herkömmlichen Knickarmroboter 16, der, wie durch die weißen Richtungspfeile angedeutet, über eine Vielzahl von Freiheitsgraden verfügt.

Mittels des Knickarmroboters 16 lässt sich eine Kassettenanordnung 17 frei im Raum und insbesondere in Relation zu einem auf einer Grundfläche 18 ruhenden Kern 19 verfahren und positionieren. Die Kassettenanordnung 17 umfasst aus Gründen der besseren zeichnerischen Übersicht lediglich eine Kassette 20, die wiederum mit zwei parallel zueinander senkrecht laufenden Rollenbahnen 21,22 gebildet ist. Jede der Rollenbahnen 21,22 weist fünf Rollen auf, von denen lediglich zwei Rollen 23,24 in den jeweiligen Rollenbahnen 21,22 mit einer Bezugsziffer versehen sind. Die Rollen 23,24 innerhalb der Rollenbahnen 21,22 sind bevorzugt durch individuell elektronisch geregelte Elektromotoren angetrieben. Zwischen den gleichmäßig beabstandet angeordneten Rollenbahnen 21,22 ist ein mit einer punktierten Linie dargestellter Abschnitt 25 eines Verstärkungsfaserflächengebildes vollständig aufgenommen. Der Abschnitt 25 wird in Richtung der kleinen schwarzen Pfeile 26 zwischen den beiden Rollenbahnen 21,22 durch die motorisch angetriebenen Rollen herausgeschoben. Der Kern 19 weist exemplarisch eine in etwa rechteckförmige Querschnittsgeometrie mit einer Vorderseite 27, einer Kernrückseite 28 sowie einer Kernoberseite 29 auf. Eine Kernunterseite 30 ruht auf der Grundfläche 18 innerhalb der Vorrichtung 15.

Grundsätzlich kann der Kern 19 über eine nahezu beliebige Querschnittsgeometrie verfügen, um eine große Variationsbreite von Profilvorformlingen zur Herstellung von CFK-Verstärkungsprofilen fertigen zu können. Ferner kann der Kern 19 in mindestens einer Richtung des Raumes und hierbei gegebenenfalls sogar abschnittsweise unterschiedlich stark gekrümmt ausgestaltet sein. Im Bereich der Kernvorderseite 27 ist ein Leitblech 31 angeordnet, das die Positionierung des Abschnittes 25 erleichtert. Ein Anfang 32 des Abschnittes 25 befindet sich schon außerhalb der Kassette 20, während sich das Ende 33 noch innerhalb der Kassette 20 befindet.

Im Bereich der Kassettenanordnung 17 ist ferner eine so genannte Blaseinrichtung 34 angeordnet. Die Blaseinrichtung 34 umfasst eine Halterung 35 sowie eine nach unten geneigt an der Halterung befestigte Düse 36 zum Austritt von Druckluft.

Im Bereich der Kernvorderseite 27 sind eine vordere Klemmvorrichtung 37 und im Bereich der Kernrückseite 28 eine hintere, hierzu korrespondierende Klemmeinrichtung 38 vorgesehen. Beide Klemmvorrichtungen 37,38 sind in einer vom Kern 19 zurück geschwenkten Position dargestellt und können mittels nicht dargestellter Aktuatoren in Richtung der kleinen weißen, gekrümmten Pfeile durch Verschwenken jeweils zur Anlage an die Kernvorderseite 27 bzw. die Kernrückseite 28 gebracht werden, um den Anfang 32 bzw. das Ende 33 des Abschnittes 25 festzuklemmen. Infolge des Festklemmens des Abschnittes 25 wird es zudem ermöglicht, mittels der am Knickarmroboter 16 angeordneten Kassettenanordnung 17 den Abschnitt 25 unter vorzugsweise leichtem Zug um den Kern 19 herum abzulegen und hierbei insbesondere in gekrümmten Bereichen gleichzeitig zu drapieren. Ein Koordinatensystem 39 dient zur Veranschaulichung der Bewegungen der Kassettenanordnung 17 im Raum.

In der Darstellung der Fig. 2 ist die Kassettenanordnung 17 bereits so in Bezug zur Vorderseite 27 des Kerns 19 in Position gebracht, dass der Abschnitt 25 mittels der motorisch angetriebenen Rollen aus der Kassette 20 für den Beginn eines Ablege- und Drapierprozesses heraus geschoben werden kann.

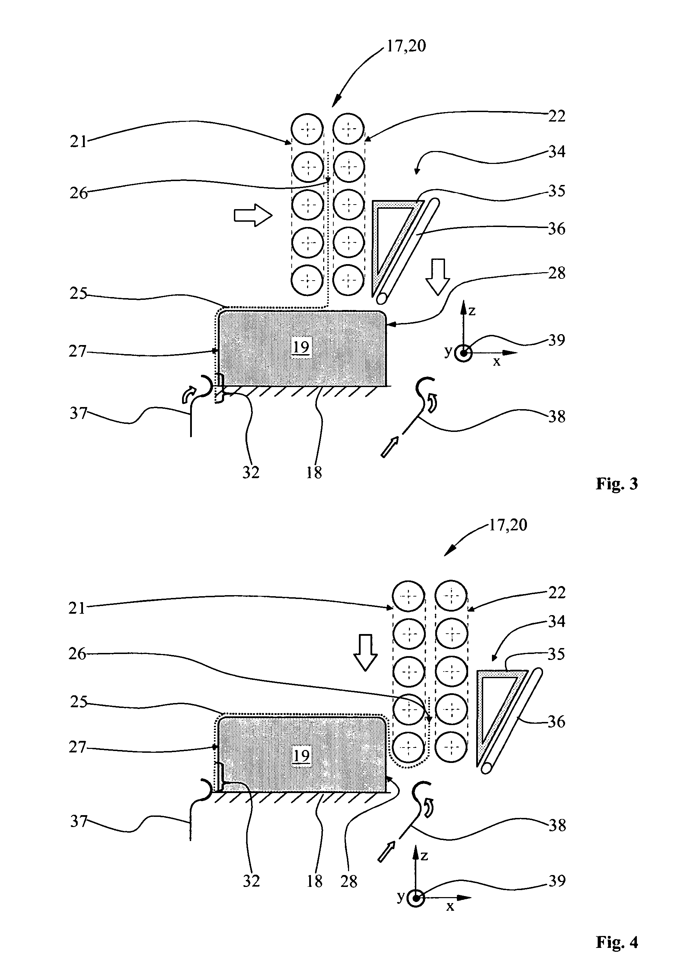

Im Weiteren soll anhand der **Fig. 2** bis **6** der Ablauf des Verfahrens zur Herstellung eines Profilvorformlings mittels einer schematisiert dargestellten Vorrichtung näher erläutert werden. In den Figuren 2 bis 6 sind dieselben konstruktiven Elemente jeweils mit den gleichen Bezugsziffern versehen. Auf die Darstellung des Knickarmroboters 16 wurde aus Gründen der Übersicht in den Fig. 3-6 verzichtet.

Ausgehend von der in Fig. 2 gezeigten Position wird der Abschnitt 25 mittels der Rollen senkrecht aus der Kassette 20 herausgefahren, bis der Anfang 32 des Abschnittes 25 so weit vorgeschoben ist, dass dieser ein kleines Stück über die Kernvorderseite 27 nach unten hin über steht und mittels der vorderen Klemmeinrichtung 37, wie in Fig. 3 illustriert, festgeklemmt werden kann. Alternativ kann der Anfang 32 auch bündig mit der Kernvorderseite 27 abschließen.

Anschließend wird die gesamte Kassettenanordnung 17 mittels des Knickarmroboters 16 senkrecht, das heißt parallel zur z-Achse des Koordinatensystems 39 nach oben verfahren und, wie in den **Fig. 3,4** illustriert, in horizontaler Richtung, das heißt parallel zur x-Achse verschoben, um den Abschnitt 25 über die Kernvorderseite 27 und die Kernoberseite 29 zu ziehen. In Abhängigkeit von der lokalen Krümmung des Kerns 19 wird der Abschnitt 25 des Verstärkungsfaserflächengebildes zu gleich drapiert. Bei den Bewegungen der Kassettenanordnung 17, die in sämtlichen Figuren mittels der weißen Richtungspfeile veranschaulicht sind, wird der zwischen den Rollenbahnen 21,22 aufgenommene

Abschnitt 25 im Idealfall synchron mittels der motorisch angetriebenen Rollen in Richtung des kleinen schwarzen Pfeils 26 aus der Kassettenanordnung 17 heraus gefördert. In der

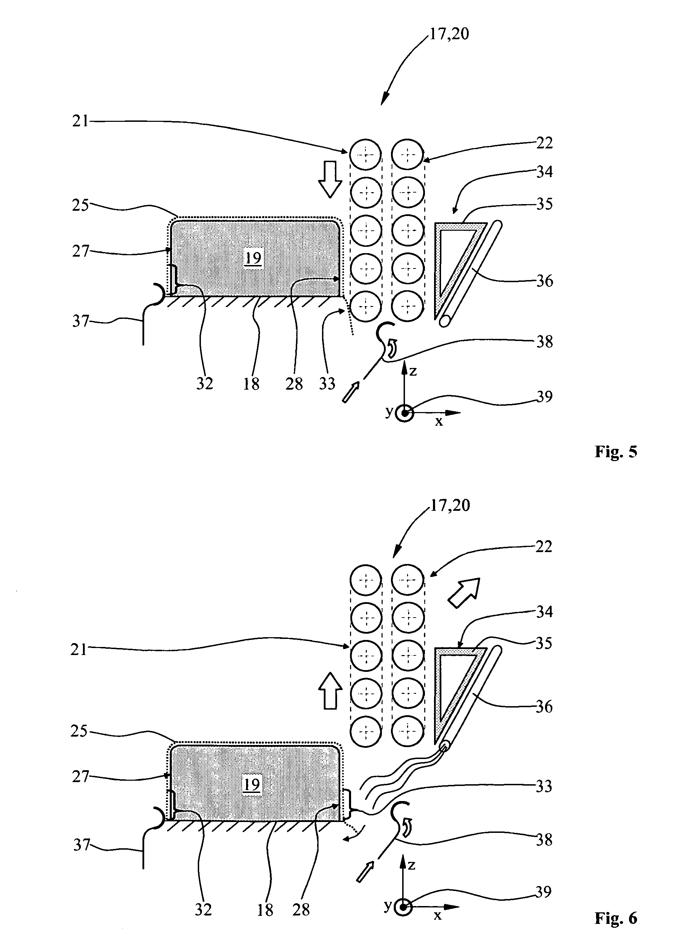

**Fig. 5** hat die Kassettenanordnung 17 nach dem Abschluss einer senkrechten Abwärtsbewegung ihre Endposition in Relation zum Kern 19 erreicht und das Ende 33 des Abschnittes 25 liegt im Bereich der Kernrückseite 28 an.

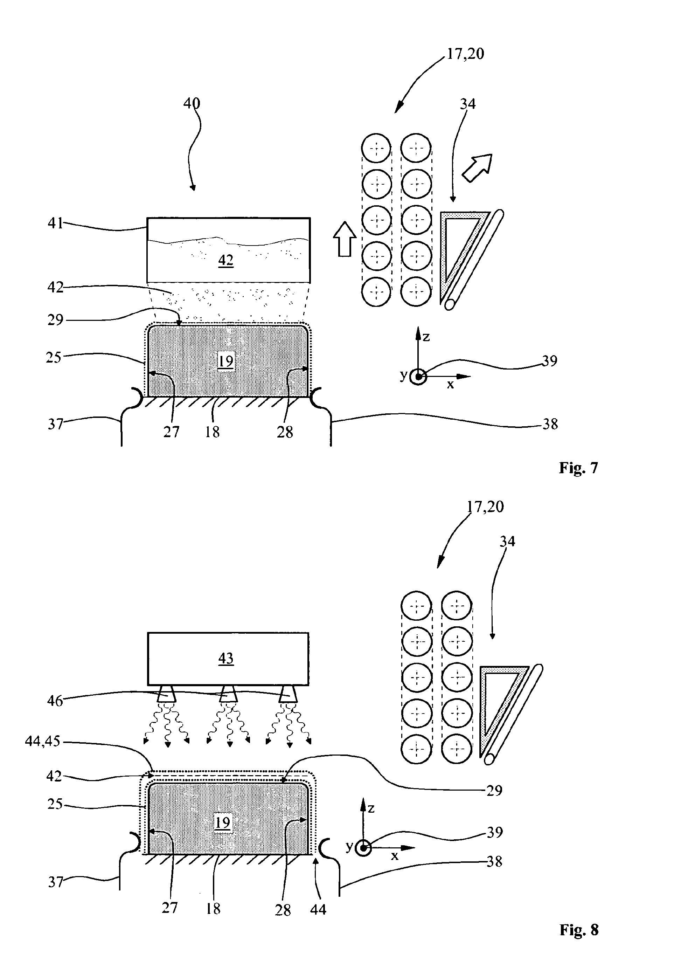

In **Fig. 6** ist veranschaulicht, wie aus der Düse 36 der Blaseinrichtung 34 Druckluft austritt und hierdurch das Ende 33 des Abschnittes 25 - bis auf einen kleinen Überstand - zur Anlage an die Kernrückseite 28 gebracht wird. Anschließend kann eine Lagefixierung des abgelegten und drapierten Abschnittes 25 mittels der hinteren Klemmeinrichtung 38 erfolgen (insb. vgl. Fig. 7). Durch den Einsatz von Druckluft wird eine Beschädigung der Integrität der Faseranordnung des Abschnittes 25 verhindert.

In der **Fig. 7** ist dargestellt, wie mittels einer Auftragseinrichtung 40, die beispielsweise einen Behälter 41 mit einem Bindemittel 42 umfasst, das Bindemittel 42 möglichst gleichmäßig und vollflächig auf den im Bereich der Kernoberseite 29 auf liegenden Abschnitt 25 aufgebracht wird. Zu diesem Zweck wird die Kassettenanordnung 17 bzw. in diesem Fall die einzelne Kassette 20 aus dem Wirkungsbereich der Auftragseinrichtung 40 herausgefahren. Bei dem Bindemittel 42 handelt es sich bevorzugt um ein feinkörniges thermoplastisches Granulat, das bereits bei geringen Temperaturen aufschmelzbar ist. In diesem Verfahrensschritt ist der Abschnitt 25 mittels der Klemmeinrichtungen 37,38 auf dem Kern 19 festgespannt. Alternativ kann das Bindemittel 42 auch im Bereich des auf der Kernvorderseite 27 sowie der Kernrückseite 28 aufliegenden Abschnittes 25 aufgetragen sein. Im Prozessstadium nach **Fig. 8** wurde eine weitere Lage 44 eines Abschnittes 45 des Verstärkungsfaserflächengebildes auf den Abschnitt 25 mit dem aufgetragenen Bindemittel 42 abgelegt und drapiert. Anschließend wird eine Heizeinrichtung 43 oberhalb des Kerns 19 in einem geeigneten Abstand positioniert. Die Heizeinrichtung 43 verfügt über eine Vielzahl von matrixförmig angeordneten Infrarotstrahlern 46, die beispielsweise mit Keramikplatten mit eingelassenen elektrischen Heizdrähten oder anderen geeigneten Strahlungsquellen gebildet sein können. Die Heizeinrichtung 43 kann mittels induktiver Heizung arbeiten. In Folge der matrixförmigen Anordnung der Infrarotstrahler 46 unterhalb der Heizeinrichtung 43 ist eine schnelle und vor allem gleichmäßige Erwärmung des Bindemittels 42 auf dessen Schmelztemperatur gewährleistet. Darüber hinaus erlauben die Infrarotstrahler 46 auch eine schnelle Abkühlung des Bindemittels 42, wodurch ein unkontrolliertes Verlaufen des Bindemittels 42 zwischen den Lagen 44 weitgehend verhindert wird. Um die Oberfläche der abgelegten Lagen nach der Aktivierung des Bindemittels 42 zu glätten, kann mindestens ein nicht dargestellter Pressenstempel vorgesehen sein, dessen Größe und Anordnung einer Solloberflächengeometrie des abgelegten Verstärkungsfaserflächengebildes entspricht. Der oder die Pressenstempel sind bevorzugt aktiv tempierbar, das heißt sie sind mit einer Heizeinrichtung und/oder mit einer Kühleinrichtung ausgestattet. Sowohl die Heizeinrichtung als auch die Kühleinrichtung können beispielsweise mit durchlaufenden Bohrungen in den Stempeln gebildet sein, durch die ein entsprechend temperiertes Fluid, beispielsweise ein Öl oder ein Gas geführt wird. Alternativ können Widerstands- und Induktionsheizungen sowie Kühleinrichtungen mit Peltierelementen vorgesehen sein.

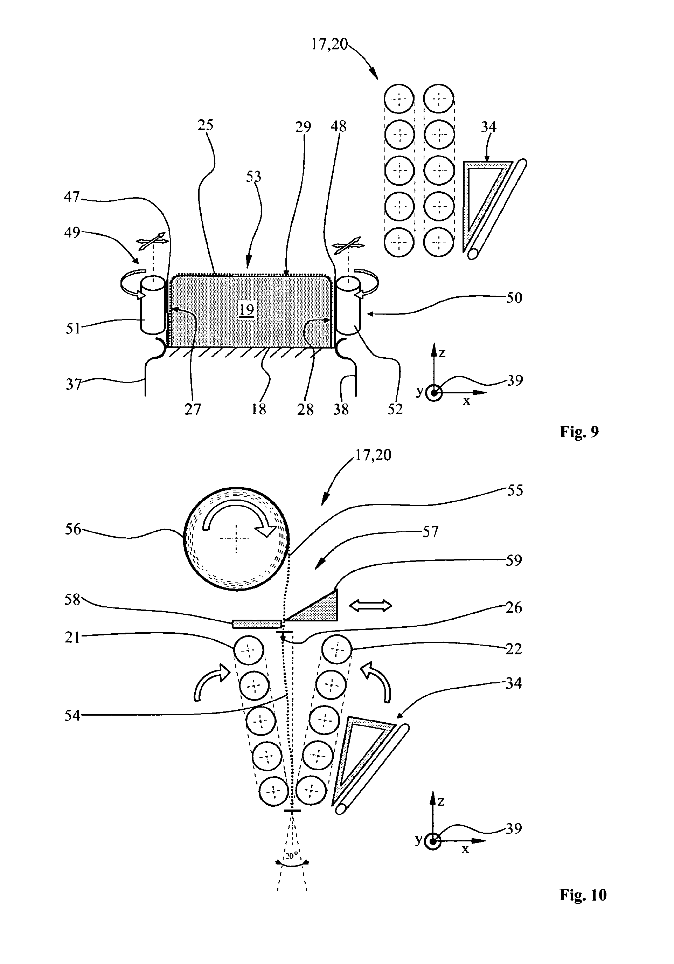

In der **Fig. 9** ist dargestellt, wie zwei optionale bahnförmige Verstärkungsfaseranordnungen 47,48 mittels zweier Abrolleinrichtungen 49,50 im Bereich der Kernvorderseite 27 sowie der Kernrückseite 28 auf dem Abschnitt 25 abgelegt werden. Die beiden Abrolleinrichtungen 49,50 umfassen unter anderem jeweils eine Vorratsrolle 51,52, von denen die endlose Verstärkungsfaseranordnung 47,48 kontinuierlich abgezogen werden kann. Gegebenenfalls verfügen die Abrollrichtungen 49,50 auch über eine nicht dargestellte Schneideinrichtung, um die Verstärkungsfaseranordnung 47,48 auf ein vorgegebenes Maß ablängen zu können. Die beiden Abrolleinrichtungen 49,50 werden durch ein Handhabungsgerät, beispielsweise einen konventionellen Knickarmroboter, im Wesentlichen parallel zur y-Achse des Koordinatensystems 39 bewegt. Um einen möglichst spannungsfreien sowie verzugsfreien Ablage- und Drapierprozess zu gewährleisten, rotieren die Vorratsrollen 51,52 synchron zur linearen Bewegung der Abrolleinrichtungen 49,50 entlang der y-Achse.

Die beiden Verstärkungsfaseranordnungen 47,48 sind vorzugsweise mit einer Vielzahl von Kohlenfasern aufgebaut, die in der so genannten 90°-Richtung verlaufen, das heißt in der Darstellung der Fig. 9 parallel zur y-Achse des Koordinatensystems 39. Demgegenüber handelt es sich bei dem Abschnitt 25 um ein so genanntes multiaxiales Kohlefasergelege, bei dem die einzelnen Kohlefasern unter einem Richtungswinkel von ± 45° sowie 0° abwechselnd übereinander geschichtet verlaufen. Dies bedeutet, dass beispielsweise im Bereich des auf der Kernoberseite 29 aufliegenden Abschnittes 25 die Kohlefasern des Multiaxialgeleges im Wesentlichen innerhalb bzw. parallel zur xy-Ebene des Koordinatensystems 39 verlaufen und hierbei mit der x-Achse bzw. der y-Achse jeweils Winkel von ± 45° bzw. 0° einschließen.

Eine Integration dieser bahnförmigen Verstärkungsfaseranordnungen 47,48 ist optional und wird in der Regel nur bei der Herstellung von Profilvorformlingen für spezielle Aufgaben, beispielsweise zur Verwendung als Ringspantsegment zur Aussteifung von Rumpfzellenstrukturen von Flugzeugen, vorgenommen. Vorteilhafter Weise werden die Verstärkungsanordnungen mit der bevorzugten 0°-Richtung beidseitig von jeweils mindestens einer Lage des Abschnittes 25,45 vom multiaxialen Fasergelege bedeckt, um optimale Oberflächeneigenschaften des späteren Verbundbauteils zu erzielen, was jedoch in Fig. 9 der besseren Übersicht halber nicht dargestellt ist. Mit dem Abschluss des Prozessschrittes nach Maßgabe der Fig. 9 ist der eigentliche Aufbau eines Profilvorformlings 53, der mit einer Vielzahl von übereinander abgelegten und drapierten Abschnitten 25,45 des multiaxialen Fasergeleges sowie einer optional dazwischen eingelegten Verstärkungsfaseranordnung mit 0°-Lagen gebildet ist, beendet.

Dieser, eine komplexe Kohlefaserverstärkungsstruktur aufweisende Profilvorformling 53 wird mittels einer weiteren Handhabungsvorrichtung vom Kern 19 automatisch abgehoben und in ein entsprechend ausgebildetes, in der Regel mehrteiliges Formwerkzeug eingelegt, das anschließend fest verschlossen wird. In das Formwerkzeug wird dann ein aushärtbares Kunststoffmaterial zur Ausbildung einer den Profilvorformling vollständig umschließenden Matrix eingegeben. Anschließend erfolgt die Aushärtung des Kunststoffmaterials, insbesondere eines geeigneten Epoxidharzsystems, unter gleichzeitiger Anwendung von Druck und/oder Temperatur zum CFK-Bauteil bzw. CFK-Profil, das nach dem Abkühlen des Werkzeugs aus diesem entnommen werden kann. Vor der Verbringung des Profilvorformlings 53 in das mehrteilige Formwerkzeug zur Durchführung des vorstehend geschilderten RTM-Prozesses kann es erforderlich sein, insbesondere im Bereich der Kanten des Profilvorformlings 53 überschüssiges Material durch Besäumen abzutrennen, um die geforderte hohe Maßhaltigkeit zu gewährleisten. Darüber hinaus kann es erforderlich sein, auch das fertig ausgehärtete CFK-Bauteil einem abschließenden Beschneidungsvorgang zu unterziehen, um es endgültig auf Maß zu bringen.

In der Fig. 10 ist dargestellt, wie die bevorzugt vollautomatisch erfolgende Beschickung der Kassettenanordnung 17 bzw. der diskreten Kassette 20 mit einem neuen Abschnitt 54 des Verstärkungsfaserflächengebildes 55 nach dem Ablegen bzw. dem Drapieren eines Abschnittes auf dem Kern 19 erfolgt.

Zu diesem Zweck können die Rollenbahnen 21,22, wie in Fig. 10 prinzipiell angedeutet, um einen kleinen Winkel, beispielsweise von jeweils 10°, auseinander geklappt werden, um das Einführen des Flächengebildes 55 zu erleichtern. Durch das Abrollen des Flächengebildes 55 in Richtung des kleinen schwarzen Pfeils von der Vorratsrolle 56 wird der abzutrennende Abschnitt 54 zwischen die beiden Rollenbahnen 21,22 verbracht. Im Anschluss daran werden die Rollenbahnen 21,22 in Richtung der weißen gekrümmten Pfeile wieder zusammengeklappt, das heißt die Rollenbahnen 21,22 verlaufen in etwa parallel zueinander und zwischen ihnen ist das Verstärkungsfaserflächengebilde 55 aufgenommen.

Abschließend erfolgt mittels einer Schneideinrichtung 57 die Abtrennung des Abschnittes 54 vom Verstärkungsfaserflächengebilde 55. Die vollautomatische Schneideinrichtung 57 verfügt unter anderem beispielsweise über ein Widerlager 58 sowie ein Schneidmesser 59. Durch eine horizontale Bewegung des Schneidmessers 59 in Richtung des horizontalen weißen Doppelpfeils erfolgt die Abtrennung des Abschnittes 54. Alternativ kann beispielsweise auch eine Abtrennung mittels einer Wasser- oder Laserschneideinrichtung erfolgen.

Anschließend kann die Kassette 20 mittels der Handhabungsvorrichtung erneut in Bezug auf den Kern 19 positioniert und der neue Abschnitt 54, wie in der Fig. 3 bis 8 illustriert, auf dem Kern 19 abgelegt und drapiert werden. Dieser Vorgang wird solange wiederholt, bis eine vorgegebene Lagenanzahl von Abschnitten des Verstärkungsfaserflächengebildes und/oder der bahnförmigen Verstärkungsfaseranordnungen innerhalb des aufzubauenden Profilvorformlings 53 auf dem Kern 19 erreicht ist.

Vorzugsweise sind das Formwerkzeug zur Infiltration des Profilformlings 53 mit dem aushärtbaren Kunststoffmaterial bzw. zur Durchführung des RTM-Prozesses und die Heizeinrichtung zur Temperierung des Formwerkzeugs, die Injektionsvorrichtung für das aushärtbare Kunststoffmaterial einschließlich aller hierfür erforderlichen Hilfseinrichtungen unmittelbar mit in die Vorrichtung zur Durchführung des Verfahrens integriert.

### Bezugszeichenliste

| | |
|---|---|
| 1 | Vorrichtung |
| 2 | Kassettenanordnung |
| 3 | 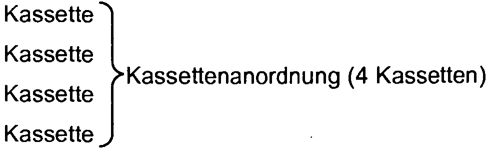 |
| 4 | |
| 5 | |
| 6 | |
| 7 | Kern (eindimensional gekrümmt) |
| 8 | Abschnitt (Verstärkungsfaserflächengebilde) |
| 9 | Rollenbahn |
| 10 | Rollenbahn |
| 11 | Rolle |
| 12 | Teilrolle |
| 13 | Teilrolle |
| 14 | Teilrolle |
| 15 | Vorrichtung |
| 16 | Knickarmroboter |
| 17 | Kassettenanordnung |
| 18 | Grundfläche (Vorrichtung) |
| 19 | Kern (eindimensional gekrümmt) |
| 20 | Kassette |
| 21 | Rollenbahn |
| 22 | Rollenbahn |
| 23 | Rolle |
| 24 | Rolle |
| 25 | Abschnitt (Verstärkungsfaserflächengebilde) |
| 26 | Pfeil |
| 27 | Kernvorderseite |
| 28 | Kernrückseite |
| 29 | Kernoberseite |
| 30 | Kernunterseite |
| 31 | Leitblech |
| 32 | Anfang (Abschnitt) |
| 33 | Ende (Abschnitt) |
| 34 | Blaseinrichtung |
| 35 | Halterung (Blaseinrichtung) |
| 36 | Düse (Blaseinrichtung) |
| 37 | vordere Klemmeinrichtung |
| 38 | hintere Klemmeinrichtung |
| 39 | Koordinatensystem |
| 40 | Fixereinrichtung |
| 41 | Behälter |
| 42 | Bindemittel |
| 43 | Heizeinrichtung |
| 44 | Lage (zweiter Abschnitt) |
| 45 | Abschnitt (zweiter vom Verstärkungsfaserflächengebilde) |
| 46 | Infrarotstrahler |
| 47 | Verstärkungsfaseranordnung (bahnförmig) |
| 48 | Verstärkungsfaseranordnung (bahnförmig) |
| 49 | Abrolleinrichtung |
| 50 | Abrolleinrichtung |
| 51 | Vorratsrolle |
| 52 | Vorratsrolle |
| 53 | Profilvorformling |
| 54 | Abschnitt (Verstärkungsfaserflächengebilde) |
| 55 | Verstärkungsfaserflächengebilde |
| 56 | Vorratsrolle |
| 57 | Schneideinrichtung |
| 58 | Widerlager |
| 59 | Schneidmesser |

## Patentansprüche

1. Vorrichtung (1; 15) zum automatischen Ablegen und Drapieren einer Vielzahl bahnförmiger Abschnitte (8; 25, 45, 54) eines Flächengebildes (55), insbesondere eines multiaxialen Fasergeleges und/oder eines Verstärkungsgewebes, zur Schaffung eines Profilvorformlings (53) auf einem Kern (7; 19) durch wiederholtes Ablegen und Drapieren der Abschnitte (8; 25, 45, 54), um ein Verstärkungsprofil durch Imprägnierung des Profilvorformlings (53) mit einem aushärtbaren Kunststoffmaterial in einem Formwerkzeug herzustellen, **dadurch gekennzeichnet, dass** mindestens ein Abschnitt (8; 25, 45, 54) in mindestens einer Kassette (3-6; 20) zwischen zwei Rollenbahnen (9, 10; 21, 22) zur Ablage auf dem Kern (7; 19) bereitgehalten wird, wobei der bereits auf die richtige Länge abgelängte mindestens eine Abschnitt (8; 25, 45, 54) zwischen den beiden Rollenbahnen (9, 10; 21, 22) aufnehmbar ist.

2. Vorrichtung (1; 15) nach Patentanspruch 1, **dadurch gekennzeichnet, dass** mindestens drei Kassetten (3-6; 20), insbesondere gelenkig miteinander verbundene Kassetten (3-6; 20), zur Bildung einer Kassettenanordnung (2; 17) vorgesehen sind, um einer beliebigen Krümmung des Kerns (7; 19) zu folgen.

3. Vorrichtung (1; 15) nach Patentanspruch 1 oder 2, **dadurch gekennzeichnet, dass** die Kassetten (3-6; 20) mittels einer Handhabungsvorrichtung, insbesondere mittels eines Knickarmroboters (16) und/oder eines Portalroboters, mit mindestens sechs Freiheitsgraden frei im Raum positionierbar sind.

4. Vorrichtung (1; 15) nach einem der Patentansprüche 1 bis 3, **dadurch gekennzeichnet, dass** der Kern (7; 19) zur Schaffung eines Profilvorformlings (53) für ein mindestens einfach gekrümmtes Verstärkungsprofil insbesondere eine U-förmige, eine Z-förmige, eine L-förmige, eine **I**-förmige Querschnittsgeometrie oder eine beliebige Kombination hiervon aufweist.

5. Vorrichtung (1; 15) nach einem der Patentansprüche 1 bis 4, **dadurch gekennzeichnet, dass** im Bereich einer Kernvorderseite (27) und einer Kernrückseite (28) jeweils eine Klemmvorrichtung (37, 38) vorgesehen ist.

6. Vorrichtung (1; 15) nach einem der Patentansprüche 1 bis 5, **dadurch gekennzeichnet, dass** eine bahnförmige Verstärkungsfaseranordnung (47, 48) insbesondere im Bereich der Kernvorderseite (27) und/oder der Kernrückseite (28) mittels mindestens einer frei im Raum positionierbaren Abrollvorrichtung (49, 50) ablegbar ist.

7. Vorrichtung (1; 15) nach einem der Patentansprüche 1 bis 6, **dadurch gekennzeichnet, dass** ein Abstand zwischen jeweils zwei Rollenbahnen (9, 10; 21, 22) in mindestens einer Kassette (3-6; 20) einstellbar ist.

8. Vorrichtung (1; 15) nach einem der Patentansprüche 1 bis 7, **dadurch gekennzeichnet, dass** jede Rollenbahn (9, 10; 21, 22) eine Vielzahl von zylindrischen Rollen (11; 23, 24) aufweist.

9. Vorrichtung (1; 15) nach einem der Patentansprüche 1 bis 8, **dadurch gekennzeichnet, dass** die Rollen (11; 23, 24) mit einem elastischen Material, insbesondere mit einem Gummimaterial, einem Schaumkunststoff, einem Flor oder einer beliebigen Kombination hiervon, gebildet sind.

10. Vorrichtung (1; 15) nach einem der Patentansprüche 1 bis 9, **dadurch gekennzeichnet, dass** im Bereich mindestens einer Kassette (3-6; 20) eine mit Druckluft arbeitende Blasvorrichtung (34) vorgesehen ist.

11. Vorrichtung (1; 15) nach einem der Patentansprüche 1 bis 10, **dadurch gekennzeichnet, dass** eine Auftragseinrichtung (40), insbesondere eine ein Bindemittel (42) beinhaltende Streueinrichtung, vorgesehen ist, wobei das Bindemittel (42) insbesondere ein thermoplastisches Pulver ist, das mittels einer Heizeinrichtung (43) aufschmelzbar ist.

12. Vorrichtung (1; 15) nach einem der Patentansprüche 1 bis 11, **dadurch gekennzeichnet, dass** mindestens eine temperierbare Presseinrichtung zur Konsolidierung des Profilvorformlings (53) vorgesehen ist.

13. Verfahren zur Herstellung eines zumindest einfach gekrümmten Verstärkungsprofils mittels der Vorrichtung (1; 15) nach einem der Patentansprüche 1 bis 12, umfassend die Schritte:
a) Beschicken mindestens einer Kassette (3-6; 20) der Vorrichtung (1; 15) mit einem Abschnitt (8; 25, 45, 54) eines Verstärkungsfaserflächengebildes (55) derart, dass nachfolgend der auf die richtige Länge abgelängte Abschnitt (8; 25, 45, 54) zwischen zwei Rollenbahnen (9, 10; 21, 22) der Kassette (3-6; 20) aufgenommen ist;
b) Positionieren der Kassette (3-6; 20) in Bezug auf einen Kern (7; 19);
c) Bereithalten des mindestens einen Abschnitts (8; 25, 45, 54) des Verstärkungsfaserflächengebildes (55) in der mindestens einen Kassette (3-6; 20) zwischen den beiden Rollenbahnen (9, 10; 21, 22),
d) Schaffung eines Profilvorformlings (53) durch schichtweises Ablegen und Drapieren der Abschnitte (8; 25, 45, 54) des Verstärkungsfaserflächengebildes (55) auf dem Kern (7; 19), wobei mindestens ein Abschnitt (8; 25, 45, 54) aus der mindestens einen Kassette (3-6; 20) herausgezogen wird,
e) Einlegen des Profilvorformlings (53) in ein Formwerkzeug,
f) Imprägnieren und Aushärten des Profilvorformlings (53) in dem Formwerkzeug mit einem aushärtbaren Kunststoffmaterial unter gleichzeitiger Anwendung von Druck und Temperatur.

14. Verfahren nach Patentanspruch 13, **dadurch gekennzeichnet, dass** der mindestens eine Abschnitt (8; 25, 45, 54) aus der mindestens einen Kassette (3-6; 20) herausgeschoben wird, anschließend der Anfang (32) der abzulegenden Abschnitte (8; 25, 45, 54) jeweils mit einer vorderen Klemmvorrichtung (37) an einer Kernvorderseite fixiert wird, anschließend die mindestens eine Kassette (3-6; 20) mittels einer Handhabungsvorrichtung um den Kern (7; 19) herumgeführt wird, wobei der mindestens eine Abschnitt (8; 25, 45, 54) zugleich zwischen den zwei Rollenbahnen (9, 10; 21, 22) herausgezogen, drapiert sowie abgelegt wird und abschließend mindestens ein Ende (33) des mindestens einen Abschnittes (8; 25, 45, 54) mittels einer hinteren Klemmvorrichtung (38) an einer Kernrückseite (28) fixiert wird.

15. Verfahren nach Patentanspruch 13 oder 14, **dadurch gekennzeichnet, dass** mittels einer Abrolleinrichtung (49, 50) insbesondere im Bereich der Kernvorderseite (27) und/oder der Kernrückseite (28) eine im Wesentlichen bahnförmige Verstärkungsfaseranordnung (47, 48) abgelegt und mit den Klemmvorrichtungen (37, 38) fixiert wird.

16. Verfahren nach einem der Patentansprüche 13 bis 15, **dadurch gekennzeichnet, dass** nach dem Ablegen von mindestens einer Lage (44) von Abschnitten (8; 25, 45, 54) ein Bindemittel (42) zur Lagefixierung zumindest bereichsweise auf einen abgelegten Abschnitt (8; 25, 45, 54) und/oder eine bahnförmige Verstärkungsfaseranordnung (47, 48) aufgebracht wird.

17. Verfahren nach einem der Patentansprüche 13 bis 16, **dadurch gekennzeichnet, dass** nach der erfolgten Lagefixierung mindestens einer Lage (44) von Abschnitten (8; 25, 45, 54) des Profilvorformlings (53) durch das Bindemittel (42) eine Konsolidierung mittels einer Presseinrichtung erfolgt.

## Claims

1. Device (1; 15) for automated laying and draping of a plurality of strip-like portions (8; 25, 45, 54) of a planar formation (55), in particular of a multi-axial fibre structure and/or of a reinforcing fabric, in order to create a profiled preform (53) on a core (7; 19) by repeated laying and draping of the portions (8; 25, 45, 54), in order to produce a reinforcing profile by impregnation of the profiled preform (53) with a curable synthetic material in a moulding tool, **characterised in that** at least one portion (8; 25, 45, 54) is kept in readiness in at least one cartridge (3-6; 20) between two roller conveyors (9, 10; 21, 22) in order to be laid on the core (7; 19), wherein the at least one portion (8; 25, 45, 54) already cut to the correct length can be received between the two roller conveyors (9, 10; 21, 22).

2. Device (1; 15) as claimed in claim 1, **characterised in that** at least three cartridges (3-6; 20), in particular cartridges (3-6; 20) connected to each other in an articulated manner, are provided to form a cartridge arrangement (2; 17) in order to follow any curvature of the core (7; 19).

3. Device (1; 15) as claimed in claim 1 or 2, **characterised in that** the cartridges (3-6; 20) can be positioned freely in space with at least six degrees of freedom by means of a handling device, in particular by means of an articulated robot (16) and/or of a gantry robot.

4. Device (1; 15) as claimed in any one of claims 1 to 3, **characterised in that** the core (7; 19) has in particular a U-shaped, a Z-shaped, an L-shaped, an I-shaped cross-sectional geometry or any combination thereof in order to create a profiled preform (53) for an at least singly curved reinforcing profile.

5. Device (1; 15) as claimed in any one of claims 1 to 4, **characterised in that** in the region of a core front side (27) and of a core rear side (28) in each case a clamping device (37, 38) is provided.

6. Device (1; 15) as claimed in any one of claims 1 to 5, **characterised in that** a strip-like reinforcing fibre arrangement (47, 48) can be laid in particular in the region of the core front side (27) and/or of the core rear side (28) by means of at least one unrolling device (49, 50) which can be freely positioned in space.

7. Device (1; 15) as claimed in any one of claims 1 to 6, **characterised in that** a distance between two respective roller conveyors (9, 10; 21, 22) in at least one cartridge (3-6; 20) is adjustable.

8. Device (1; 15) as claimed in any one of claims 1 to 7, **characterised in that** each roller conveyor (9, 10; 21, 22) has a plurality of cylindrical rollers (11; 23, 24).

9. Device (1; 15) as claimed in any one of claims 1 to 8, **characterised in that** the rollers (11; 23, 24) are formed with an elastic material, in particular with a rubber material, a foamed synthetic material, a web or any combination thereof.

10. Device (1; 15) as claimed in any one of claims 1 to 9, **characterised in that** in the region of at least one cartridge (3-6; 20) a blowing device (34) operating with compressed air is provided.

11. Device (1; 15) as claimed in any one of claims 1 to 10, **characterised in that** an application device (40), in particular a scattering device containing a binder (42) is provided, wherein the binder (42) is in particular a thermoplastic powder which can be melted by a heating device (43).

12. Device (1; 15) as claimed in any one of claims 1 to 11, **characterised in that** at least one temperature-controllable pressing device is provided to consolidate the profiled preform (53).

13. Method for manufacturing an at least singly curved reinforcing profile by means of the device (1; 15) as claimed in any one of claims 1 to 12, comprising the steps of:
a) charging at least one cartridge (3-6; 20) of the device (1; 15) with a portion (8, 25, 45, 54) of a reinforcing fibre planar formation (55) in such a way the portion (8; 25, 45, 54) cut to the correct length is subsequently received between two roller conveyors (9, 10; 21, 22) of the cartridge (3-6; 20);
b) positioning the cartridge (3-6; 20) in relation to a core (7; 19);
c) keeping the at least one portion (8; 25, 45, 54) of the reinforcing fibre planar formation (55) in readiness in the at least one cartridge (3-6; 20) between the two roller conveyors (9, 10; 21, 22),
d) creating a profiled preform (53) by layer-wise laying and draping of the portions (8; 25, 45, 54) of the reinforcing fibre planar formation (55) on the core (7; 19), wherein at least one portion (8; 25, 45, 54) is pulled out of the at least one cartridge (3-6; 20),
e) placing the profiled preform (53) into a moulding tool,
f) impregnating and curing the profiled preform (53) in the moulding tool with a curable synthetic material with simultaneous application of pressure and temperature.

14. Method as claimed in claim 13, **characterised in that** the at least one portion (8; 25, 45, 54) is pushed out of the at least one cartridge (3-6; 20), then the start (32) of the portions (8; 25, 45, 54) to be laid is fixed in each case on a core front side with a front clamping device (37), then the at least one cartridge (3-6; 20) is passed around the core (7; 19) by means of a handling device, wherein the at least one portion (8; 25, 45, 54) is at the same time pulled out between the two roller conveyors (9, 10; 21, 22), draped and laid, and then at least one end (33) of the at least one portion (8; 25, 45, 54) is fixed on a core rear side (28) by means of a rear clamping device (38).

15. Method as claimed in claim 13 or 14, **characterised in that** by means of an unrolling device (49, 50) in particular in the region of the core front side (27) and/or of the core rear side (28) a substantially strip-like reinforcing fibre arrangement (47, 48) is laid and fixed with the clamping devices (37, 38).

16. Method as claimed in any one of claims 13 to 15, **characterised in that** after laying of at least one layer (44) of portions (8; 25, 45, 54), a binder (42) is applied for positional fixing purposes at least in regions onto a laid portion (8; 25, 45, 54) and/or a strip-like reinforcing fibre arrangement (47, 48).

17. Method as claimed in any one of claims 13 to 16, **characterised in that** after completed positional fixing of at least one layer (44) of portions (8; 25, 45, 54) of the profiled preform (53) by the binder (42), consolidation is effected by means of a pressing device.

## Revendications

1. Dispositif (1 ; 15) pour le dépôt et le drapage de manière automatique d'une pluralité de sections en forme de bande (8 ; 25, 45, 54) d'une structure plane (55), en particulier d'un stratifié fibreux multiaxial et/ou d'un tissu de renfort, pour créer une préforme profilée (53) sur un noyau (7 ; 19) par dépôt et drapage répétés des sections (8 ; 25, 45, 54), pour produire un profilé de renfort par imprégnation de la préforme profilée (53) avec une matière plastique durcissable dans un outil de formage, **caractérisé par le fait qu'**au moins une section (8 ; 25, 45, 54) est mise à disposition dans au moins une cassette (3-6 ; 20) entre deux convoyeurs à rouleaux (9, 10 ; 21, 22) pour être déposée sur le noyau (7 ; 19), l'au moins une section (8 ; 25, 45, 54) déjà découpée à la longueur correcte pouvant être logée entre les deux convoyeurs à rouleaux (9, 10 ; 21, 22).

2. Dispositif (1 ; 15) selon la revendication 1, **caractérisé par le fait qu'**au moins trois cassettes (3-6 ; 20) sont prévues, en particulier des cassettes (3-6 ; 20) reliées entre elles de manière articulée, pour former un dispositif à cassettes (2 ; 17) pour suivre une courbure quelconque du noyau (7 ; 19).

3. Dispositif (1 ; 15) selon la revendication 1 ou 2, **caractérisé par le fait que** les cassettes (3-6 ; 20) peuvent être positionnées librement dans l'espace au moyen d'un dispositif de manipulation, en particulier au moyen d'un robot articulé (16) et/ou d'un robot portique, avec au moins six degrés de liberté.

4. Dispositif (1 ; 15) selon l'une des revendications 1 à 3, **caractérisé par le fait que** le noyau (7 ; 19) présente, pour la création d'une préforme profilée (53) pour un profilé de renfort au moins simplement incurvé, en particulier une géométrie de section transversale en forme de U, en forme de Z, en forme de J, en forme de I ou une combinaison de ces formes.

5. Dispositif (1 ; 15) selon l'une des revendications 1 à 4, **caractérisé par le fait qu'**un dispositif de serrage (37, 38) est prévu respectivement dans une zone d'une face avant du noyau (27) et d'une face arrière du noyau (28).

6. Dispositif (1 ; 15) selon l'une des revendications 1 à 5, **caractérisé par le fait qu'**une disposition en fibres de renfort (47, 48) en forme de bande peut être déposée dans la zone de la face avant du noyau (27) et/ou de la face arrière du noyau (28) au moyen au moins d'un dévidoir (49, 50) positionnable librement dans l'espace.

7. Dispositif (1 ; 15) selon l'une des revendications 1 à 6, **caractérisé par le fait qu'**un écart peut être réglé entre respectivement deux convoyeurs à rouleaux (9, 10 ; 21, 22) dans au moins une cassette (3-6 ; 20).

8. Dispositif (1 ; 15) selon l'une des revendications 1 à 7, **caractérisé par le fait que** chaque convoyeur à rouleaux (9, 10 ; 21, 22) présente une multitude de rouleaux cylindriques (11 ; 23, 24).

9. Dispositif (1 ; 15) selon l'une des revendications 1 à 8, **caractérisé par le fait que** les rouleaux (11 ; 23,24) sont réalisés en matériau élastique, en particulier en matériau en caoutchouc, en matériau en mousse, en voile ou en une combinaison de ces matériaux.

10. Dispositif (1 ; 15) selon l'une des revendications 1 à 9, **caractérisé par le fait qu'**un dispositif de soufflage (34) fonctionnant avec de l'air comprimé est prévu dans la zone d'au moins une cassette (3-6 ; 20).

11. Dispositif (1 ; 15) selon l'une des revendications 1 à 10, **caractérisé par le fait qu'**un dispositif d'application (40), en particulier un dispositif d'épandage contenant un liant (42), est prévu, le liant (42) étant en particulier une poudre thermoplastique, qui peut être fondue au moyen d'un dispositif de chauffage (43).

12. Dispositif (1 ; 15) selon l'une des revendications 1 à 11, **caractérisé par le fait qu'**au moins un dispositif de pression thermorégulable est prévu pour la consolidation de la préforme profilée (53).

13. Procédé de fabrication d'un profilé de renfort au moins simplement incurvé au moyen du dispositif (1 ; 15) selon l'une des revendications 1 à 12, comportant les étapes suivantes :
a) chargement d'au moins une cassette (3-6 ; 20) du dispositif (1 ; 15) avec une section (8 ; 25, 45, 54) d'une structure de surface en fibres de renfort (55), de telle sorte que la section (8 ; 25, 45, 54) découpée à la longueur correcte peut ensuite être logée entre deux convoyeurs à rouleaux (9, 10 ; 21, 22) de la cassette (3-6 ; 20) ;
b) positionnement de la cassette (3-6 ; 20) par rapport à un noyau (7 ; 19) ;
c) mise à disposition de l'au moins une section (8 ; 25, 45, 54) de la structure de surface en fibres de renfort (55) dans l'au moins une cassette (3-6 ; 20) entre les deux convoyeurs à rouleaux (9, 10 ; 21, 22) ;
d) création d'une préforme profilée (53) par dépôt et drapage par couche des sections (8 ; 25, 45, 54) de la structure de surface en fibres de renfort (55) sur le noyau (7 ; 19), au moins une section (8 ; 25, 45, 54) étant retirée d'au moins une cassette (3-6 ; 20) ;
e) insertion de la préforme profilée (53) dans un outil de formage ;
f) imprégnation et durcissement de la préforme profilée (53) dans l'outil de formage avec un matériau plastique durcissable en utilisant simultanément la pression et la température.

14. Procédé selon la revendication 13, **caractérisé par le fait que** l'au moins une section (8 ; 25, 45, 54) est sortie d'au moins une cassette (3-6 ; 20), ensuite le début (32) des sections (8 ; 25, 45, 54) à déposer est fixé respectivement avec un dispositif de serrage avant (37) à une face avant du noyau, ensuite l'au moins une cassette (3-6 ; 20) contourne le noyau (7 ; 19) au moyen d'un dispositif de manipulation, l'au moins une section (8 ; 25, 45, 54) étant retirée, drapée ainsi que déposée simultanément entre les deux convoyeurs à rouleaux (9, 10 ; 21, 22) et enfin au moins une extrémité (33) de l'au moins une section (8 ; 25, 45, 54) est fixée au moyen d'un dispositif de serrage arrière (38) à une face arrière du noyau (28).

15. Procédé selon la revendication 13 ou 14, **caractérisé par le fait qu'**une disposition en fibres de renfort (47, 48) essentiellement en forme de bande est déposée au moyen d'un dévidoir (49, 50), en particulier dans la zone de la face avant du noyau (27) et/ou de la face arrière du noyau (28) et fixée avec les dispositifs de serrage (37, 38).

16. Procédé selon l'une des revendications 13 à 15, **caractérisé par le fait que**, après le dépôt d'au moins une couche (44) de sections (8 ; 25, 45, 54), un liant (42) pour la fixation en position au moins par secteurs est appliqué sur une section (8 ; 25, 45, 54) déposée et/ou une disposition en fibres de renfort (47, 48) en forme de bande.

17. Procédé selon l'une des revendications 13 à 16, **caractérisé par le fait que**, une fois la fixation en position d'au moins une couche (44) de sections (8 ; 25, 45, 54) de la préforme profilée (53) réalisée par le liant (42), une consolidation est effectuée au moyen d'un dispositif de compression.
